# EUROPEAN PATENT APPLICATION

(11) **EP 2 712 517 A1**
(43) Date of publication of application: **02.04.2014**
(21) Application number: 13186406.8
(22) Date of filing: 27.09.2013
(51) Int. Cl.: A47B 43/04, A01G 9/16, A47G 7/04

(54) **Enclosure comprising collapsible shelving units**

(30) Priority: 28.09.2012 US 201213630213
(71) Applicant: Wehner, Scott, Mount Morris, Michigan 48458 (US); Jin, Zhou Xiao, Clio, Michigan 48420 (US); Worldwide Creations, LLC, Mount Morris, Michigan 48458 (US); Linhai Farsail Leisure Products Co., Ltd., Zhejiang (CN)
(72) Inventor: WEHNER, Scott, Michigan, MI Michigan MI 48458 (US); JIN, Zhou Xiao, Michigan, MI Michigan 48420 MI (US)
(74) Representative: Lawson, Alison Christina

(57) **Abstract**

An enclosure includes a shelving unit having a first collapsible frame, a second collapsible frame, a plurality shelf support rods each having a first end connected to the first collapsible frame and a second end connected to the second collapsible frame, a plurality of shelves that are each removably supported by a pair of shelf support rods from the plurality of shelf support rods, and at least a first cover support having a first end connected to the first collapsible frame and a second end connected to the second collapsible frame. A flexible cover at least partially encloses the shelving unit and is supported with respect to the shelving unit at least in part by engagement of the flexible cover with the first cover support. At least a portion of the flexible cover is at least translucent.

## Description

### BACKGROUND

Storage shelving units can be used for holding items in various places, such as gardens, courtyards, residences and garages. Many shelving units are large, difficult to assemble and disassemble, and cannot be easily transported from place to place.

### SUMMARY

According to the invention we provide an enclosure as set out in the accompanying claims.

One aspect of the disclosed embodiments is an enclosure that includes a shelving unit and a flexible cover. The shelving unit includes a first collapsible frame, a second collapsible frame, a plurality shelf support rods each having a first end connected to the first collapsible frame and a second end connected to the second collapsible frame, a plurality of shelves that are each removably supported by a pair of shelf support rods from the plurality of shelf support rods, and at least a first cover support having a first end connected to the first collapsible frame and a second end connected to the second collapsible frame. The flexible cover at least partially encloses the shelving unit and is supported with respect to the shelving unit at least in part by engagement of the flexible cover with the first cover support. At least a portion of the flexible cover is at least translucent.

Another aspect of the disclosed embodiments is an enclosure that includes a shelving unit and a flexible cover. The shelving unit includes a first collapsible frame that includes pivotally connected frame members in a lazy tongs configuration, a second collapsible frame that includes pivotally connected frame members in a lazy tongs configuration, a plurality shelf support rods each having a first end connected to the first collapsible frame and a second end connected to the second collapsible frame, a plurality of shelves that are each removably supported by a pair of shelf support rods from the plurality of shelf support rods, a first cover support having a first end connected to the first collapsible frame and a second end connected to the second collapsible frame, and a second cover support having a first end connected to the first collapsible frame and a second end connected to the second collapsible frame. The first and second collapsible frames are extendable and collapsible in unison to move the shelving unit between an extended position and a collapsed position. The flexible cover at least partially encloses the shelving unit and is supported with respect to the shelving unit at least in part by engagement of the flexible cover with the first cover support and the second cover support, wherein at least a portion of the flexible cover is at least translucent.

Another aspect of the disclosed embodiments is an enclosure that includes a first collapsible shelving unit, a second collapsible shelving unit that is spaced apart from the first collapsible shelving unit, at least a first cover support having a first end connected to the first collapsible shelving unit and a second end connected to the second collapsible shelving unit, and a flexible cover. The flexible cover at least partially encloses the first collapsible shelving unit and the second collapsible shelving unit and is supported with respect to the first collapsible shelving unit and the second collapsible shelving unit at least in part by engagement of the flexible cover with the first cover support, wherein at least a portion of the flexible cover is at least translucent.

### BRIEF DESCRIPTION OF THE DRAWINGS

FIG. 1 is an illustration showing a collapsible shelving unit.

FIG. 2 is an illustration showing a first example of a collapsible enclosure that includes a flexible cover that is supported by a collapsible shelving unit.

FIG. 3 is a perspective view showing the collapsible shelving unit of FIG. 2.

FIG. 4 is an end view showing the collapsible shelving unit of FIG. 2.

FIG. 5 is an illustration showing the collapsible shelving unit of FIG. 2 in a partially collapsed position.

FIG. 6 is an illustration showing the collapsible shelving unit of FIG. 2 in a fully collapsed position.

FIG. 7 is an illustration showing a second example of a collapsible enclosure that includes a flexible cover that is support by one or more pairs of collapsible shelving units.

FIG. 8 is a perspective view showing the pair of collapsible shelving units of FIG. 7.

### DETAILED DESCRIPTION

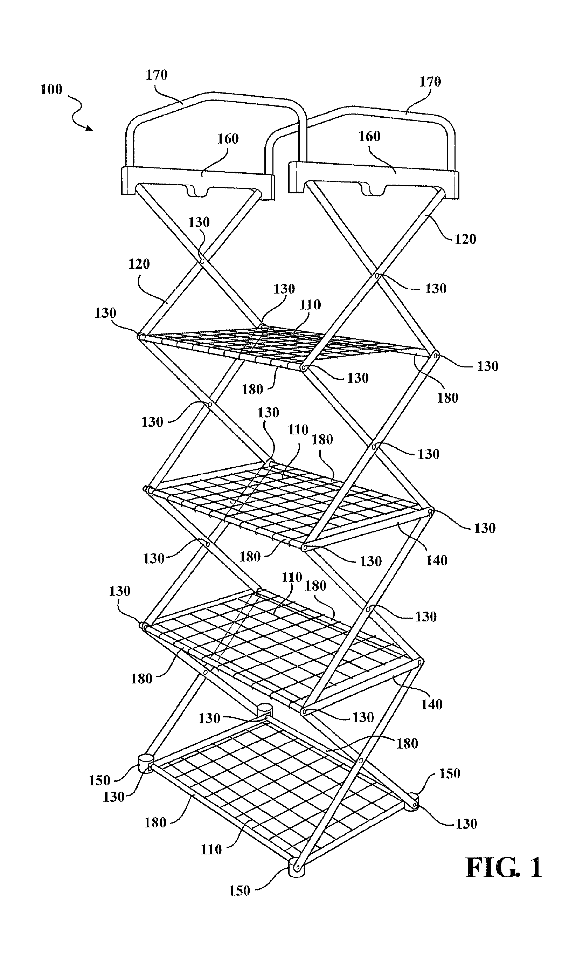

FIG. 1 shows a collapsible shelving unit 100. The collapsible shelving unit 100 can include a plurality of wire shelves 110, the front and back ends of which are bent downward to define a u-shaped profile for each of the wire shelves 110. The wire shelves 110 are supported by horizontal shelf support bars 180. The ends of each end of the horizontal shelf support bars 180 are connected to respective collapsible frames 120 by hinges, pivots, or fixed joints. The collapsible frames 120 each include a plurality of frame members that are pivotally connected to each other at pivot joints 130 to define a lazy tongs configuration. Locking bars 140 can be provided on each of the collapsible frames 120 to prevent movement from the extended positions thereof to the collapsed positions thereof, by pivotal connection of a first end of each locking bar 140 at a first one of the pivot joints 130 and a releasable connection of a second end of each locking bar at a second one of the pivot joints 130, such by a hook that engages a pin, or any other suitable structure. The collapsible shelving unit 100 includes a pair of top frames 160, which are located at the top of each of the collapsible frames 120. The two top bars 170 extend between the top frames 160. A pair of cylindrical legs 150 is located at the bottom of each of the collapsible frames 120. Components of the collapsible shelving unit 100 can be manufactured with a variety of materials, such as steel.

The collapsible shelving unit 100 can be moved between extended and collapsed positions. To maintain the collapsible shelving unit 100 in the extended position, the locking bars 140 are engaged. The wire shelves 110 are removed prior to moving the collapsible shelving unit 100 from the extended position to the collapsed position, and are replaced when the collapsible shelving unit 100 is returned to the extended position. A flexible cover (not shown in FIG. 1) can be put on the collapsible shelving unit 100, and be supported by the top bars 170. When not in use, the collapsible shelving unit can be easily folded to be ported or stored by disengaging the locking bars 140 and collapsing the collapsible frames 120.

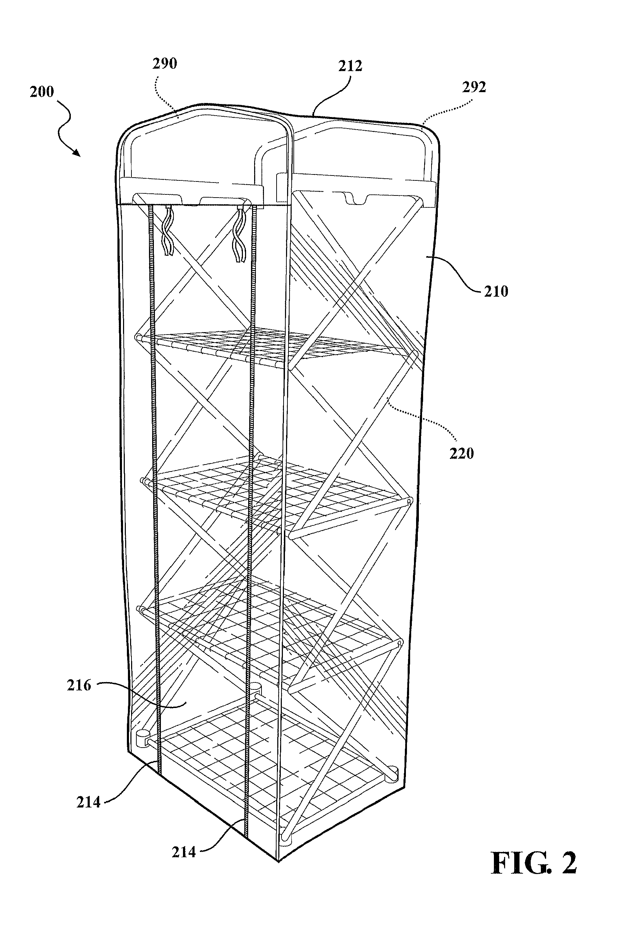

FIG. 2 is an illustration showing a collapsible enclosure 200 according to a first example. The collapsible enclosure 200 includes a flexible cover 210 that is supported by a collapsible shelving unit 220.

The flexible cover 210 at least partially encloses the collapsible shelving unit 220 and is supported with respect to the collapsible shelving unit 220 by engagement of the flexible cover 210 with at least a portion of the collapsible shelving unit 220. At least a portion of the flexible cover 210 is at least translucent. Furthermore, all or a portion of the flexible cover 210 can allow for transmission of at least infrared and invisible wavelengths of electromagnetic radiation. The flexible cover 210 can, in cooperation with the collapsible shelving unit 220, define an arched top surface 212. The flexible cover 210 can also include one or more zippers 214 or other closure structures that define an openable panel 216 (*i.e.,* a door) in the flexible cover 210.

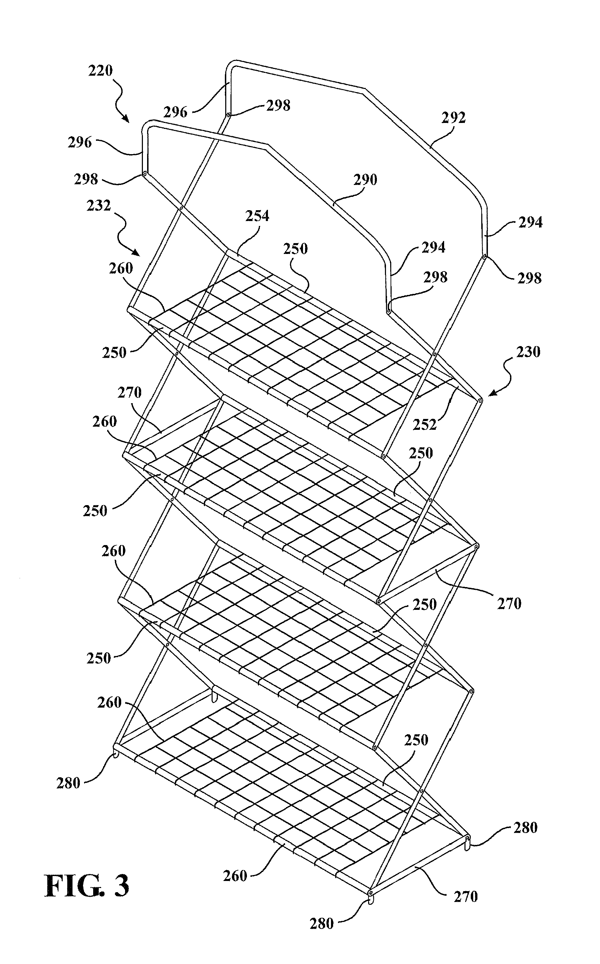

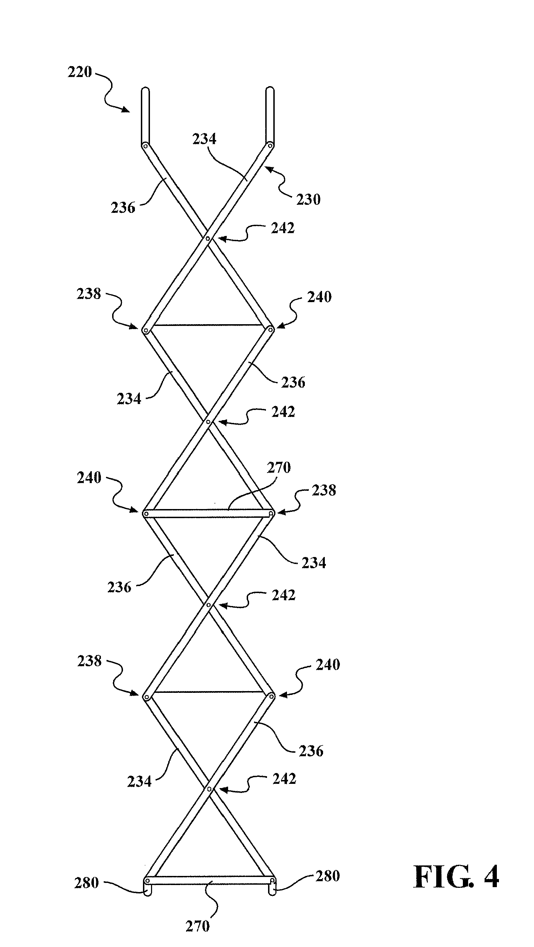

As shown in FIGS. 3-4, the collapsible shelving unit 220 can include a first collapsible frame 230 and a second collapsible frame 232. The first collapsible frame 230 and the second collapsible frame 232 can each include a plurality of pivotally connected frame members that define a lazy tongs configuration for each of the first collapsible frame 230 and the second collapsible frame 232. In particular, with reference to FIG. 4, each of the first collapsible frame 230 and the second collapsible frame 232 can include a first set of frame members 234 and a second set of frame members 236. The frame members from the first set of frame members 234 are pivotally connected to one another in an end-to-end manner at pivot joints 238. Similarly, the frame members of the second set of frame members 236 are pivotally connected to one another in an end-to-end manner at pivot joints 240. Pairs of the frame members from the first set of frame members 234 and the second set of frame members 236 are connected to one another at intermediate locations thereon at intermediate pivot joints 242. By way of the pivotally connected frame members in a lazy tongs configuration, each of the first collapsible frame 230 and the second collapsible frame 232 are extendible and collapsible in unison to move the collapsible shelving unit 220 between an extended position and a collapsed position.

The collapsible shelving unit 220 includes a plurality of shelf support rods 250. Each of the shelf support rods 250 includes a first end 252 that is connected to the first collapsible frame 230 and a second end 254 that is connected to the second collapsible frame 232. The shelf support rods 250 can be connected to the first collapsible frame 230 and the second collapsible frame 232 by any suitable means such as fixed joints, pivot joints, hinges, or other structures.

The collapsible shelving unit 220 can include a plurality of shelves 260. Each of the shelves 260 is removably supported by a pair of the shelf support rods 250. The ends of the shelves 260 can be benched downward to define a U-shape profile for each of the shelves 260, thereby providing a stable connection between the shelves 260 and the shelf support rods 250.

One or more locking bars 270 can be provided on each of the first collapsible frame 230 and the second collapsible frame 232 to prevent the collapsible shelving unit 220 from moving from the extended position to the collapsed position. The locking bars 270 can include structures such as hooks that are engageable with posts or other structures that are provided on the first collapsible frame 230 and the second collapsible frame 232. One end of each of the locking bars 270 can be pivotally mounted to a respective one of the first collapsible frame 230 or the second collapsible frame 232.

In order to support the collapsible shelving unit 220 with respect to a supporting surface, such as a floor, feet 280 can be provided on each of the first collapsible frame 230 and the second collapsible frame 232.

A first cover support 290 and a second cover support 292 each have a first end 294 connected to the first collapsible frame 230 and a second end 296 that is connected to the second collapsible frame 232. The first cover support 290 and the second cover support 292 are engageable with the flexible cover 210 (FIG. 2) for supporting the flexible cover 210 with respect to the collapsible shelving unit 220. The first cover support 290 and the second cover support 292 can be pivotally connected to each of the first collapsible frame 230 and the second collapsible frame 232 at pivot joints 298. The pivot joints 298 can be selectively lockable, for example, by incorporation of at least one locking structure, for selectively restraining pivotal motion of the first cover support 290 and the second cover support 292 with respect to the first collapsible frame 230 and a second collapsible frame 232.

The collapsible shelving unit 220 can be defined as having a first lateral side, a second lateral side, a first transverse side, and a second transverse side. The first collapsible frame 230 is located at the first lateral side, the second collapsible frame 232 is located at the second lateral side, the first cover support 290 is located at and extends along the first lateral side, and the second cover support 292 is located at and extends along the second lateral side.

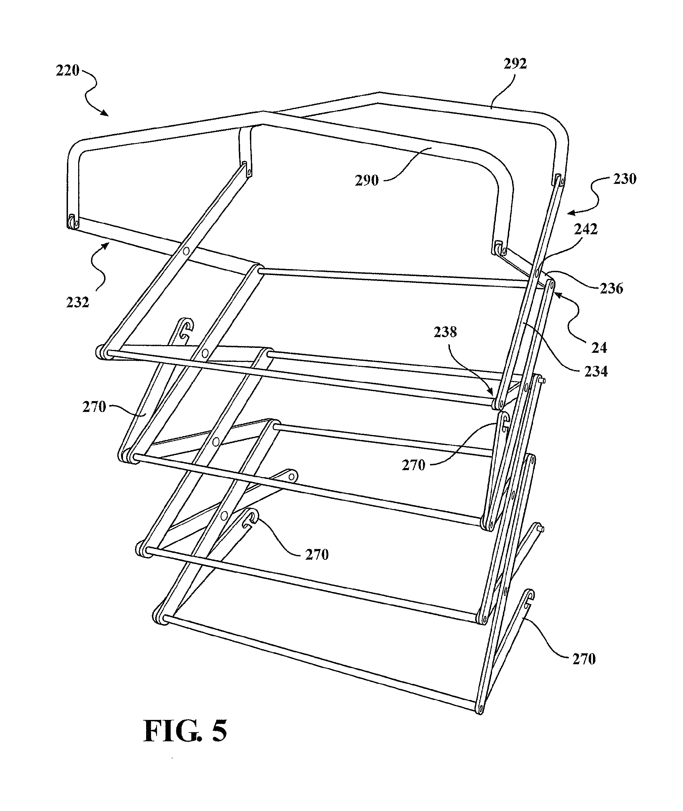

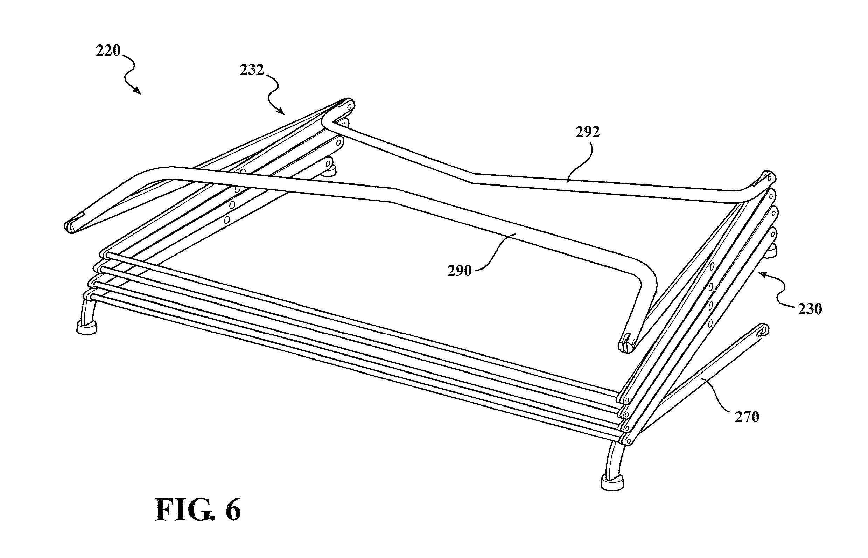

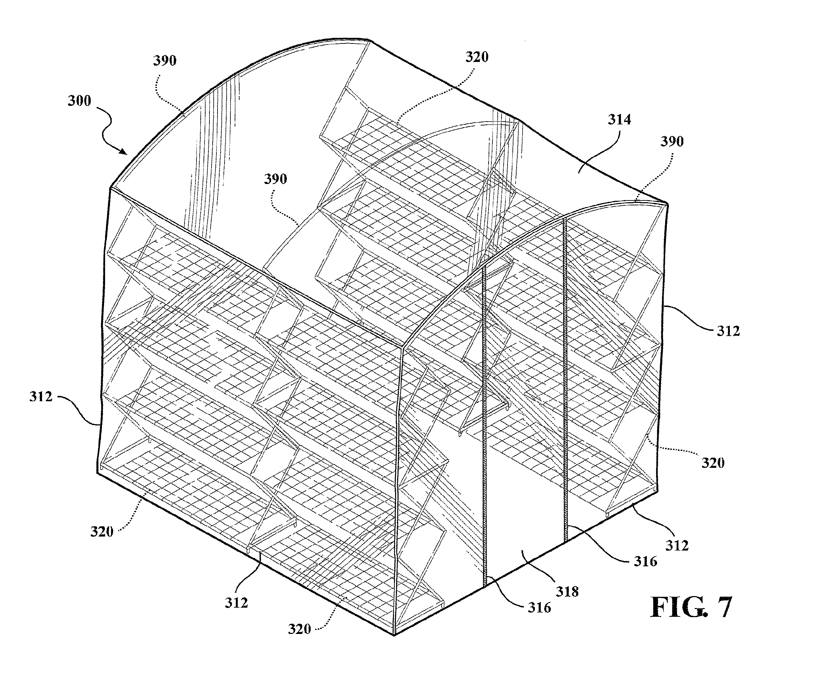

As previously noted, the collapsible shelving unit 220 is moveable between an extended position and a collapsed position. The extended position is shown in FIGS. 3-4. In FIG. 5, the locking bars 270 have been disengaged, and the first collapsible frame 230 and the second collapsible frame 232 are free to move toward the collapsed position by relative rotation of the frame members 234, 236 at the pivot joints 238, 240, 242. As shown in FIG. 5, the shelves 260 are removed prior to movement of the collapsible shelving unit 220 from the extended position toward the collapsed position. In FIG. 6, the collapsible shelving unit 220 is shown in the fully collapsed position with the first cover support 290 and the second cover support 292 unlocked and pivoted with respect to the first collapsible frame 230 and the second collapsible frame 232. FIG. 7 is an illustration showing a collapsible enclosure 300 according to a second example. The collapsible enclosure 300 includes a flexible cover 310 that is supported by two pairs of collapsible shelving units 320.

The flexible cover 310 is similar in material and construction to the flexible cover 210 of FIG. 2. The flexible cover 310 can define a plurality of upright walls 312 and, in cooperation with a plurality of substantially arcuate cover supports 390 that extend between spaced apart collapsible shelving units 320 of the pairs of collapsible shelving units, the flexible cover 310 can define an arched top surface 314. A pair of zippers 316 on one of the upright walls 312 can cooperate to define a door panel 318.

Although the collapsible enclosure 300 of FIG. 7 is shown as being supported by two pairs of collapsible shelving units 320, it should be understood that such a collapsible enclosure can be supported by one or more pairs of collapsible shelving units 320.

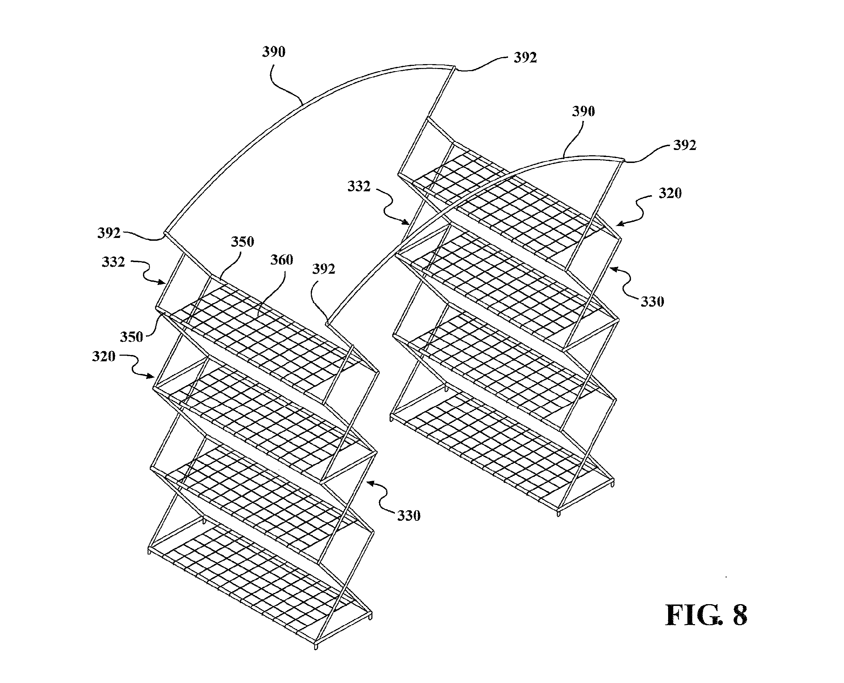

FIG. 8 is a perspective view showing a pair of the collapsible shelving units 320 from FIG. 7. The collapsible shelving units 320 are similar in construction to the collapsible shelving units 220 of FIGS. 3-4, with the exception that the first and second cover supports 290, 292 are omitted. Each of the collapsible shelving units 320 includes a first collapsible frame 330 and a second collapsible frame 332, which are constructed according to the description of the first collapsible frame 230 and the second collapsible frame 232. The collapsible shelving units 320 also include shelf support rods 350 and shelves 360. The two collapsible shelving units shown in FIG. 8 are spaced apart from one another. When combined with the flexible cover 310 (FIG. 7), this allows an open interior space to be defined for the collapsible enclosure 300. To support the flexible cover 310, the substantially arcuate cover supports 390 extend between the collapsible shelving units 320. In particular, one of the substantially arcuate cover supports 390 extends between the first collapsible frames 330 of the pair of collapsible shelving units 320, and another of the substantially arcuate cover supports 390 extends between the second collapsible frames 332 of the pair of collapsible shelving units 320. The substantially arcuate cover supports 390 can be removably connected to the first collapsible frame 330 and the second collapsible frame 332 of each of the collapsible shelving units 320 at joints 392 that can include connecting structures, such as pins or other suitable hardware.

In use, the collapsible shelving units 320 and collapsible enclosures shown herein can be used for purposes such as indoor storage, outdoor storage, or as collapsible greenhouses when used with flexible covers.

It is to be understood that the disclosure is not to be limited to the disclosed embodiments but, on the contrary, is intended to cover various modifications and equivalent arrangements included within the spirit and scope of the appended claims.

## Claims

1. An enclosure (300), comprising:
a first collapsible shelving unit (320);
a second collapsible shelving unit (320) that is spaced apart from the first collapsible shelving unit (320);
at least a first cover support (390) having a first end connected to the first collapsible shelving unit (320) and a second end connected to the second collapsible shelving unit (320); and
a flexible cover (310) that at least partially encloses the first collapsible shelving unit (320) and the second collapsible shelving unit (320) and is supported with respect to the first collapsible shelving unit (320) and the second collapsible shelving unit (320) at least in part by engagement of the flexible cover (310) with the first cover support (390), wherein at least a portion of the flexible cover (310) is at least translucent.

2. The enclosure (300) of claim 1, wherein the first cover support (390) is substantially arcuate.

3. The enclosure (300) of claim 1 or 2, wherein the first cover support (390) and the flexible cover (310) cooperate to define an arched top surface (314).

4. The enclosure (300) of any preceding claim, further comprising:
a second cover support (390) having a first end connected to the first collapsible shelving unit (320) and a second end connected to the second collapsible shelving unit (320), wherein the flexible cover (310) is supported with respect to the shelving unit (320) at least in part by engagement of the flexible cover (310) with the second cover support (390).

5. The enclosure (300) of any preceding claim wherein the first shelving unit (320) and the second shelving unit (320) each include a first collapsible frame (330), a second collapsible frame (332), a plurality shelf support rods (350) each having a first end connected to the first collapsible frame (320) and a second end connected to the second collapsible frame (320), and a plurality of shelves (360) that are each removably supported by a pair of shelf support rods (350) from the plurality of shelf support rods (350).

6. The enclosure (300) of any preceding claim, wherein the flexible cover (310) allows for transmission of at least infrared and visible wavelengths of electromagnetic radiation.
